(19) Europäisches Patentamt
European Patent Office
Office européen des brevets

(11) **EP 2 593 782 B1**

(12) **EUROPÄISCHE PATENTSCHRIFT**

(45) Veröffentlichungstag und Bekanntmachung des Hinweises auf die Patenterteilung:
**21.02.2018   Patentblatt 2018/08**

(21) Anmeldenummer: **11782008.4**

(22) Anmeldetag: **14.07.2011**

(51) Int Cl.:
**G01N 29/07** *(2006.01)*       **G01N 29/11** *(2006.01)*
**G01N 29/22** *(2006.01)*       **G01N 29/26** *(2006.01)*
**G01N 29/24** *(2006.01)*

(86) Internationale Anmeldenummer:
**PCT/DE2011/001424**

(87) Internationale Veröffentlichungsnummer:
**WO 2012/028125 (08.03.2012 Gazette 2012/10)**

(54) **Zerstörungsfreies und berührungsloses Ultraschallprüfverfahren für Bauteiloberflächen mit Gruppenstrahlern**

Nondestructive and contactless ultrasonic inspection method for surfaces of components with phased arrays

Procédé d'inspection ultrasonore nondestructive et sans contact pour des surfaces de composants avec des réseaux en phase

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2010   DE 102010032117**

(43) Veröffentlichungstag der Anmeldung:
**22.05.2013   Patentblatt 2013/21**

(73) Patentinhaber:
• **Fraunhofer-Gesellschaft zur Förderung der angewandten Forschung e.V.**
  **80686 München (DE)**
• **MTU Aero Engines AG**
  **80995 München (DE)**

(72) Erfinder:
• **KÖHLER, Bernd**
  **01259 Dresden (DE)**

• **BARTH, Martin**
  **01237 Dresden (DE)**
• **BAMBERG, Joachim**
  **85221 Dachau (DE)**
• **BARON, Hans-Uwe**
  **81249 München (DE)**

(74) Vertreter: **Pfenning, Meinig & Partner mbB**
**Patent- und Rechtsanwälte**
**An der Frauenkirche 20**
**01067 Dresden (DE)**

(56) Entgegenhaltungen:
**EP-A1- 0 487 871       EP-A2- 0 121 890**
**EP-A2- 2 182 352       US-A- 4 098 129**
**US-A1- 2009 019 937**

EP 2 593 782 B1

**Beschreibung**

Die Erfindung betrifft ein zerstörungsfreies und berührungsloses Prüfverfahren für Oberflächen von Bauteilen, das mit Ultraschallwellen arbeitet, die unter einem nicht senkrechten Einstrahlwinkel auf die Bauteil-Oberfläche eingestrahlt werden.

Zur Untersuchung akustischer Eigenschaften von Bauteilen oder Werkstücken ist das Prinzip eines akustischen Goniometers bekannt. Hierbei handelt es sich um einen Ultraschall-Winkelmesser, der in einem bestimmten Abstand auf ein Bauteil in einer Koppelflüssigkeit angewandt wird. Zwei Ultraschallwandler sind derartig auf denselben Punkt der Oberfläche des Bauteils gerichtet, dass die von einem zum Emittieren von Ultraschallwellen ausgebildeten Schallwandler emittierten Ultraschallwellen nach ihrer Reflexion an der Oberfläche des Bauteils genau auf einen zur Detektion von Ultraschallwellen ausgebildeten Schallwandler treffen. Dementsprechend sind beide Schallwandler stets im gleichen Winkel relativ zur Normalen der Oberfläche des Bauteils gerichtet und sich gegenüberstehend angeordnet. Zur Veränderung des Einstrahlwinkels der Ultraschallwellen können beide Schallwandler mechanisch um den Auftreffpunkt der Ultraschallwellen auf der Oberfläche des Bauteils geschwenkt werden.

Ein derartig ausgebildetes Goniometer erlaubt die Erfassung des winkelabhängigen Profils des Ultraschallwellen-Reflexionskoeffizienten der Oberfläche des Bauteils. Es lassen sich daraus die Schallgeschwindigkeiten verschiedener Ultraschallwellen im Bauteil bestimmen. Hierbei spricht man vom kritischen Winkel der Ultraschallwellen-Reflexion, wenn der Brechungswinkel der ins Bauteil gebrochenen Longitudinal- oder Transversalwellen gegen 90° geht oder geführte Wellen, wie Oberflächen- oder Plattenwellen (Lambwellen) maximal angeregt werden. Bei kritischen Winkeln wird die Intensität der reflektierten Ultraschallwellen maximal oder-bei Anregung geführter Wellen - minimal.

Durch gezielte Auswahl der verwendeten Schallwandler und eine geeignete Echodaten-Analyse kann das Reflexionsprofil der Ultraschallwellen auch frequenzabhängig bestimmt werden. Dadurch können auch von der Frequenz der Ultraschallwellen abhängige Ausbreitungsgeschwindigkeiten der Ultraschallwellen, also deren Dispersion, bestimmt werden. Aus der Frequenz- oder Wellenlängenabhängigkeit der an der Oberfläche des Bauteils geführten Ultraschallwellen können Eigenschaften des zu prüfenden Bauteils tiefenabhängig charakterisiert werden.

Bei Bearbeitungsverfahren der Oberflächenverfestigung wird das Gefüge eines Bauteils verändert und es werden Druckeigenspannungen eingebracht. Eine mögliche solche Bearbeitung stellt das Kugelstrahlen von Oberflächen dar. Die dadurch eingebrachten Druckeigenspannungen sind von großer Bedeutung für das Bauteilverhalten im Betrieb und es muss das Vorhandensein von Druckeigenspannungen auch nach einer gewissen Bauteillebensdauer noch nachgewiesen werden können. Es können die Eigenspannungen zum Beispiel während des Betriebs relaxieren und die durch das Oberflächenverfestigungsverfahren eingebrachten Gefügeveränderungen ausgeheilt sein, was die ordnungsgemäße Funktion des Bauteils gefährden kann. Um nachzuweisen, dass derlei noch nicht geschehen ist, kann die Abhängigkeit der Schallgeschwindigkeit der an der Oberfläche des Bauteils geführten Ultraschallwellen mit einem Goniometer vermessen werden.

Aus dem Stand der Technik bekannte Goniometer weisen in ihrer verwendeten Ultraschall-Elektronik einen sehr einfachen Aufbau auf, jedoch ist die mechanische Konstruktion zum Vorgeben des Einstrahlwinkels der Ultraschall-wellen sehr aufwendig. Ein Nachteil ergibt sich durch die gemeinsame Drehachse der Schallwandler im Auftreffpunkt der Ultraschallwellen auf der Oberfläche des Bauteils. Es müssen seitlich des Bauteils angeordnete Drehpunkte oder kreisrund gekrümmte Schienen Verwendung finden, an denen die Schallwandler verschiebbar zu montieren sind. Auch Schienen, die in festen Lagern laufen können verwendet werden, jedoch müssen die Schallwandler in jedem Fall spiegelsymmetrisch und möglichst spielfrei bewegt werden können. Zusätzlich ist eine solche mechanische Konstruktion unflexibel und insbesondere bei Messungen mit hohen Anforderungen an die Messgenauigkeit bisweilen nicht präzise genug oder durch die Fertigungspräzision der oben erwähnten Bauteile beschränkt.

Aus EP 0 121 890 A2 ist ein als Ultraschall-Mikroskop bezeichnetes System bekannt, das einen Ultraschallwandler aufweist, mit dem Ultraschallwellen über eine akustische Linse auf eine Oberfläche fokussiert werden sollen, die dort reflektiert werden und vom Ultraschallwandler detektiert werden.

Die US 2009/019937 A1 betrifft die Anwendung von Phased-Array-Ultraschallwandlern, die so ausgebildet sein sollen, dass sie Ultraschallwellen auf sphärische Oberflächen von Kugeln fokussiert richten.

In US 4,098,129 B und EP 0 487 871 A1 sind herkömmliche Goniometer-Anordnungen beschrieben.

Die EP 2 182 352 A2 betrifft eine Vorrichtung und ein Verfahren zur Ultraschallprüfung mit einer Mehrzahl von Ultraschallwellen emittierenden Elementen.

Es ist daher Aufgabe der vorliegenden Erfindung, ein Verfahren bereitzustellen, das möglichst keine mechanische Konstruktion zum Vorgeben des Einstrahlwinkels der Ultraschallwellen benötigt. Es ist eine weitere Aufgabe der vorliegenden Erfindung, die Präzision der Bauteilprüfung herkömmlicher Goniometer zu verbessern. Weiterhin ist es Aufgabe der Erfindung, eine größere Flexibilität und bessere Erkennung von Bauteilfehlern sowie die Bestimmung von Materialeigenschaften (Elastische Module) und deren tiefenabhängige Änderungen im oberflächennahen Bereich zu ermöglichen. Insbesondere ist es Aufgabe der Erfindung, eine Änderung der Bauteileigenschaften durch eine Oberflächenverfestigungsbearbeitung, wie beispielsweise dem Kugelstrahlen, nachzuweisen.

Erfindungsgemäß wird diese Aufgabe mit einem Verfahren, das die Merkmale des Anspruchs 1 aufweist, gelöst. Vorteilhafte Ausgestaltungen und Weiterbildungen können mit den in den untergeordneten Ansprüchen bezeichneten Merkmalen erreicht werden.

Zur Lösung der oben genannten Aufgaben soll die Detektion von Ultraschall-wellen durch einen Ultraschall-Gruppenstrahler (auch Phased Array genannt) mit seinen Gruppenstrahlerelementen frequenz- und/oder zeitaufgelöst erfolgen und daraus die Phasenverschiebung dieser geführten Ultraschallwellen in Bezug zu den direkt reflektierten Ultraschallwellen bestimmt werden.

Zusätzlich kann auch daraus die Frequenzabhängigkeit der Ausbreitungsgeschwindigkeit der an der Oberfläche des Bauteils geführten Ultraschallwellen bestimmt werden.

Die erfindungsgemäße Lösung wird nachfolgend ausführlich anhand mehrerer Ausführungsbeispiele beschrieben. Die hierbei dargestellten einzelnen erfindungsgemäßen Merkmale können nicht nur in einer Kombination, wie sie in den einzelnen speziellen vorteilhaften Ausführungsbeispielen gezeigt wird, auftreten, sondern können im Rahmen der vorliegenden Erfindung auch in beliebigen anderen Kombinationsmöglichkeiten ausgebildet sein oder verwendet werden.

Ein erfindungsgemäßes Verfahren erlaubt die zerstörungsfreie und berührungslose Prüfung von Bauteilen durch das Einstrahlen von Ultraschallwellen auf die Oberfläche des Bauteils unter einem vorgebbaren Einstrahlwinkel, der einen Wert zwischen 0 und 90 Grad, also der Oberflächennormalen und einer Tangenten an der Oberfläche des Bauteils, annehmen kann. Die Einstrahlung erfolgt also nicht senkrecht auf die Oberfläche des Bauteils. Nach der Einstrahlung der Ultraschallwellen an einem Auftreffpunkt an der Oberfläche des Bauteils wird die Intensität der an der Oberfläche des Bauteils reflektierten Ultraschallwellen mit einem zur Detektion von Ultraschallwellen ausgebildeten Ultraschall-Gruppenstrahler erfasst. Hierbei wird die Intensität der reflektierten Ultraschallwellen frequenzaufgelöst oder zeitaufgelöst von den Gruppenstrahlerelementen des zur Detektion von Ultraschallwellen ausgebildeten Gruppenstrahlers erfasst, besonders vorteilhaft ist es, die Ultraschall-Intensität sowohl mit Zeit- als auch Frequenzauflösung zu erfassen.

Durch die räumliche Anordnung der Gruppenstrahlerelemente des zur Detektion von Ultraschallwellen ausgebildeten Gruppenstrahlers kann in einem erfindungsgemäßen Verfahren der Einstrahlwinkel der Ultraschallwellen variiert werden, ohne dass eine mechanische Veränderung der Position oder Ausrichtung des zur Detektion von Ultraschallwellen ausgebildeten Gruppenstrahlers erforderlich ist. Stattdessen kann mit einem veränderten Einstrahlwinkel und dem daraus folgenden veränderten Reflexionswinkel der an der Oberfläche des Bauteils reflektierten Ultraschallwellen durch eine geeignete zeitliche, räumliche und/oder amplitudenmäßige Gewichtung und Erfassung der Ultraschallwellen-Intensität an den Gruppenstrahlerelementen des zur Detektion von Ultraschallwellen ausgebildeten Gruppenstrahlers gearbeitet werden.

Aus den erfassten Intensitäten der reflektierten Ultraschallwellen kann die Frequenzabhängigkeit der Ausbreitungsgeschwindigkeit der an der Oberfläche des Bauteils geführten Ultraschallwellen bestimmt werden. Bei diesen an der Oberfläche des Bauteils geführten Ultraschallwellen kann es sich zum Beispiel um Rayleigh- und/oder Lamb-Wellen handeln. Es ergibt sich für jede Ultraschallwellenfrequenz ein charakteristischer Einstrahlwinkel, bei dem die gemessene Intensität der reflektierten Ultraschall-Welle ein Minimum hat. Im Gegenzug folgt daraus, dass die an der Oberfläche des Bauteils geführten Ultraschallwellen unter diesem Einstrahlwinkel bestmöglich angeregt werden. Über die Beziehung

$$c_{US}(f) = \frac{c_{medium}}{\sin(\alpha_{min}(f))} \quad (1)$$

kann aus der Frequenzabhängigkeit des Einstrahlwinkels $\alpha$ mit der minimalen reflektierten Intensität, $\alpha_{min}(f)$, die Ausbreitungsgeschwindigkeit der an der Oberfläche des Bauteils geführten Ultraschallwellen, $c_{US}(f)$, frequenzabhängig über die als bekannt vorausgesetzte Ultraschallwellen-Ausbreitungsgeschwindig-keit $c_{medium}$ des das Bauteil umgebenden Mediums, zum Beispiel Wasser, Gel oder Luft, ermittelt werden.

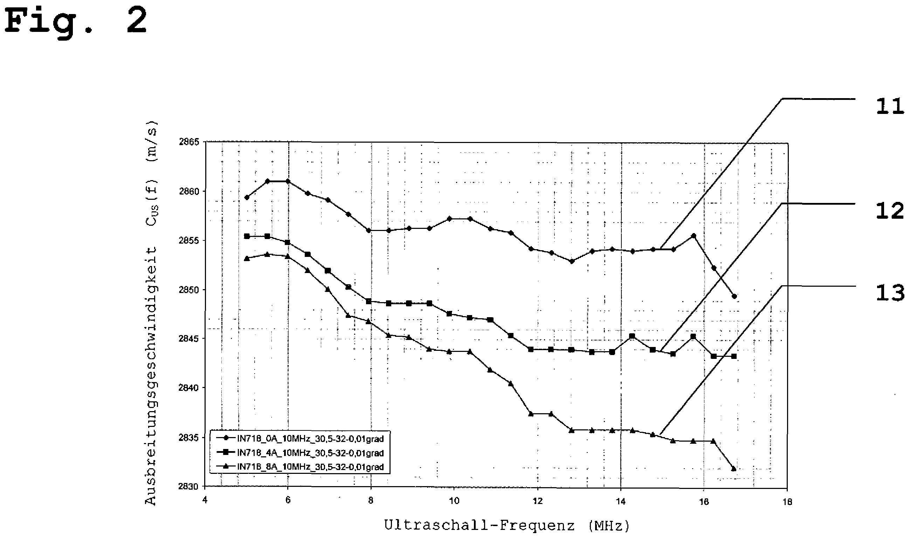

Die frequenzabhängige Ausbreitungsgeschwindigkeit der an der Oberfläche des Bauteils geführten Ultraschallwellen $c_{US}(f)$ ist von den Eigenschaften der Bauteiloberfläche abhängig. Fig 2 zeigt eine Beispielmessung von $c_{US}(f)$ über einen Ultraschall-Frequenzbereich von 5 bis 17 MHz. Die mit Rauten (♦) markierte Messwertverteilung 11 für $c_{US}(f)$ stammt hierbei von einem Bauteil, das keiner Kugelstrahlbearbeitung an der Oberfläche ausgesetzt war. Die mit Quadraten (■) markierte Messwertverteilung 12 der $c_{US}(f)$ wurde an einem Bauteil erfasst, das einer Kugelstrahlintensität von 4 Almen ausgesetzt war. Die mit Dreiecken (▲) markierte Messwertverteilung 13 der $c_{US}(f)$ wurde an einem Bauteil ermittelt, das einer Kugelstrahlintensität von 8 Almen ausgesetzt wurde.

Die Messwertverteilungen nach Fig. 2 stellen hierbei einen ersten Schritt der Messdatenauswertung dar und können nach Durchführung eines erfindungsgemäßen Verfahrens auch ortsaufgelöst über der Oberfläche des Bauteils erfasst werden.

In einer weiteren Ausführungsform des erfindungsgemäßen Verfahrens können die Gruppenstrahlerelemente des zur Detektion von Ultraschallwellen ausgebildeten Gruppenstrahlers zur Erfassung des räumlichen Intensitätsprofils der reflektierten Ultraschallwellen beim zur Detektion von Ultraschallwellen ausgebildeten oder dafür genutzten Gruppenstrahler eingesetzt werden. Durch ihre bekannte räumliche Anordnung ermöglichen die Gruppenstrahlerelemente die Erfassung des räumlichen Intensitätsprofils der reflektierten Ultraschallwellen, das durch Interferenz der direkt an der Oberfläche des Bauteils reflektierten Ultraschallwellen mit Ultraschallwellen, die von den an der Oberfläche des Bauteils geführten Ultraschallwellen abgestrahlt werden, gebildet wird.

Durch die Erfassung des durch Interferenz entstandenen räumlichen Ultraschall-Intensitätsprofils am zur Detektion von Ultraschallwellen ausgebildeten Gruppenstrahler kann eine Phasendifferenz zwischen den an der Oberfläche des Bauteils geführten Ultraschallwellen und den direkt an der Oberfläche des Bauteils reflektierten Ultraschallwellen bestimmt werden. Diese Phasendifferenz kann eine Folge der Eigenschaften des zu prüfenden Bauteils sein und ermöglicht dadurch Rückschlüsse auf weitere Eigenschaften des Bauteils und seiner Oberfläche.

In einer vorteilhaften Ausführung des erfindungsgemäßen Verfahrens wird ein Ultraschall-Gruppenstrahler benutzt, der zum Emittieren von Ultraschallwellen ausgebildet ist. In einem vorteilhafterweise verwendeten Linien-Gruppenstrahler sind einzeln ansteueroder regelbare Gruppenstrahlerelemente streifenförmig in möglichst geringem Abstand nebeneinander angeordnet. Jedes Gruppenstrahlerelement ist zum Emittieren von Ultraschallwellen ausgebildet. Durch eine zeitliche Verzögerung der Anregung der einzelnen Gruppenstrahlerelemente untereinander können die einzelnen emittierten Ultraschallwellen zu einer resultierenden Ultraschall-Welle überlagert und dadurch vom Gruppenstrahler unter einem bestimmten Winkel emittiert werden. Hierbei ergibt sich der Abstrahlwinkel $\beta$ der resultierenden Ultraschall-Welle gegenüber der Ebene der Gruppenstrahlerelemente nach der Beziehung

$$\beta = \sin_,^{-1}\left(\frac{\Delta t \cdot c_{medium}}{d}\right) \qquad (2)$$

wobei $d$ der räumliche Abstand der Gruppenstrahlerelemente voneinander und $\Delta t$ die zeitliche Differenz des Maximums der Anregung zweier jeweils benachbarter Gruppenstrahlerelemente ist. Auf diese Weise kann damit der Einstrahlwinkel der Ultraschallwellen auf die Oberfläche des Bauteils ohne Bewegung des Ultraschall-Gruppenstrahlers verändert werden. Mit Gleichung (2) kann auch die Verzögerung $\Delta t$ zwischen den Empfangssignalen jeweils benachbarter Gruppenstrahlerelemente am zur Detektion von Ultraschallwellen ausgebildeten Gruppenstrahler berechnet werden, die aus einem bestimmten Einstrahlwinkel resultiert. Damit können die erfassten Signale der einzelnen Gruppenstrahlerelemente vor einem späteren Aufaddieren zeitlich gegeneinander verschoben werden, um einen Detektionswinkel $\beta'$ mit maximaler Empfangsempfindlichkeit einzustellen.

Vorteilhafterweise kann auch eine Regelung der Anregung der einzelnen Gruppenstrahlerelemente mit einer Signalerfassung und Rückwirkung basierend auf den vom zur Detektion von Ultraschallwellen ausgebildeten Gruppenstrahler oder seinen Gruppenstrahlerelementen und der/den von ihm/ihnen erfassten Ultraschall-Intensität/en, der an der Oberfläche des Bauteils reflektierten Ultraschallwellen, durchgeführt werden.

In einer weiteren vorteilhaften Ausführungsform eines erfindungsgemäßen Verfahrens wird die räumliche und zeitliche Anregung der Gruppenstrahlerelemente eines zum Emittieren von Ultraschallwellen ausgebildeten Gruppenstrahlers gesteuert, um ein definiertes resultierendes räumliches und/oder zeitliches Intensitätsprofil der Ultraschallwellen durch interferierende Überlagerung der Ultraschallwellen-Emission der einzelnen Gruppenstrahlerelemente an einem definierten Ort und/oder zu einem definierten Zeitpunkt herzustellen.

So kann zum Beispiel eine Fokussierung der auf die Oberfläche des Bauteils eingestrahlten Ultraschallwellen am Bauteil erreicht werden. Dadurch kann die räumliche Auflösung des erfindungsgemäßen Prüfverfahrens an der Oberfläche des Bauteils verbessert werden. Auch kann bei einem dynamisch bewegten Bauteil dessen Oberfläche zu einem definierten Zeitpunkt geprüft werden, indem durch einen Ultraschallwellen-Puls durch eine geeignete zeitliche Anregung der Gruppenstrahlerelemente des zum Emittieren von Ultraschallwellen ausgebildeten Gruppenstrahlers Ultraschallwellen zum definierten Zeitpunkt auf die Oberfläche des Bauteils eingestrahlt werden.

Nach dem Huygensschen Prinzip der Interferenz der Partialwellen aller einzelnen Gruppenstrahlerelemente des zum Emittieren von Ultraschallwellen ausgebildeten Gruppenstrahlers kann damit auch durch eine Regelung der Anregung der Gruppenstrahlerelemente mit Hilfe von Sensoren, die zur Detektion von Ultraschallwellen ausgebildet sind, nahezu jedes räumliche und/oder zeitliche Intensitätsprofil der in einem erfindungsgemäßen Verfahren verwendeten Ultraschallwellen hergestellt werden.

Vorteilhafterweise erfolgt die Erfassung der Ultraschallwellen-Intensität durch den erfindungsgemäß vorgesehenen, zur Detektion von Ultraschallwellen ausgebildeten Gruppenstrahler und sowohl zeit- als auch frequenzaufgelöst. In einer vorteilhaften Ausführungsform des erfindungsgemäßen Verfahrens können Beugungseffekte, der auf die Oberfläche des Bauteils eingestrahlten Ultraschallwellen, durch eine so hergestellte zeitliche und/oder räumliche Ultraschallwellen-Intensitätsverteilung minimiert werden.

Auch können durch Anwendung einer räumlichen Fensterfunktion an den Ultraschallwellen emittierenden Gruppenstrahlerelementen eines zum Emittieren von Ultraschallwellen ausgebildeten Gruppenstrahlers Kantenwellen und Nebenkeulen beim Ultraschallwellen-Emittieren stark verringert werden. Insbesondere kann die Verwendung einer Fensterfunktion in Form einer Gaußschen Glockenkurve zur Ausbildung der eingestrahlten Ultraschallwellen zu einem Intensitätsprofil führen, das dem einer ebenen Ultraschall-Welle ähnlich ist, was insbesondere bei der Vermeidung von Messfehlern von Vorteil sein kann.

Es kann jedes Gruppenstrahlerelement eines zum Emittieren von Ultraschall-wellen ausgebildeten Gruppenstrahlers einzeln angeregt werden. Die an der Oberfläche des Bauteils reflektierten Ultraschallwellen werden von allen Gruppenstrahlerelementen des zur Detektion von Ultraschallwellen ausgebildeten Gruppenstrahlers erfasst. Dabei ist es vorteilhaft, wenn jedes Gruppenstrahlerelement ein möglichst breites, gleichartiges Ultraschallwellen-Frequenzspektrum emittiert bzw. emittieren kann und/oder empfangen kann.

Die von allen Gruppenstrahlerelementen des zur Detektion von Ultraschall-wellen ausgebildeten Gruppenstrahlers erfassten räumlichen, zeitaufgelösten und/oder frequenzaufgelösten Ultraschallwellen-Intensitätssignale jedes Ultraschallwellen emittierenden einzelnen Gruppenstrahlerelements können im Anschluss an die Erfassung mit den übrigen erfassten Ultraschallwellen-Intensitätssignalen überlagert und dabei auch skaliert werden. Dies kann zum Beispiel in einer geeignet ausgebildeten Datenverarbeitungsvorrichtung erfolgen.

Es kann auf diese Weise die Oberfläche des Bauteils in kürzerer Zeit gegenüber einer tatsächlichen und physikalischen Überlagerung der durch die Gruppenstrahlerelemente emittierten Ultraschallwellen vermessen werden.

In einer weiteren vorteilhaften Ausführungsform kann bei einem erfindungsgemäßen Verfahren mit umschaltbaren Gruppenstrahlern gearbeitet werden, die zwischen einer Ausbildung zum Emittieren von Ultraschallwellen und einer Ausbildung zur Detektion von Ultraschallwellen umschaltbar sind. Auf diese Weise kann die Präzision der erfindungsgemäßen Oberflächenprüfung am Bauteil erhöht werden. Dabei wird zunächst eine Einstrahlung von Ultraschallwellen an der Oberfläche des Bauteils mit dem ersten Gruppenstrahler vorgenommen, der dabei zum Emittieren von Ultraschallwellen eingesetzt wird und die Intensität der reflektierten Ultraschallwellen wird durch den zweiten Gruppenstrahler erfasst. Darauf wird die Funktionsweise beider Gruppenstrahler vom Emittieren zur Detektion und von der Detektion zum Emittieren umgeschaltet und das Verfahren erneut durchgeführt. Auf diese Weise können Oberflächeneffekte am Bauteil, die durch Reflexion in eine bestimmte Richtung auftreten, erkannt werden.

In einer weiteren Ausführungsform kann vorteilhafterweise mit einem einzigen Gruppenstrahler gearbeitet werden. Dieser wird dabei zum Emittieren von Ultraschallwellen und zu deren Detektion umgeschaltet, so dass er selbst die von der Oberfläche des Bauteils reflektierten Ultraschallwellen erfassen kann.

Besonders vorteilhaft wird in einem solchen Verfahren ein Reflektor-Element verwendet, wodurch die zunächst von der Oberfläche des Bauteils reflektierten Ultraschallwellen auf die Oberfläche des Bauteils zurückreflektiert werden, wo sie ein weiteres Mal reflektiert werden und von dem zwischenzeitlich zur Detektion von Ultraschallwellen eingesetzten Gruppenstrahler erfasst werden können. Bei einem derartigen Verfahren treten zwei Reflexionen der eingestrahlten Ultraschallwellen an der Oberfläche des Bauteils auf, was das Bestimmen eines Einstrahlwinkels mit einem Minimum an detektierter Ultraschallwellen-Intensität erleichtern kann.

Besonders vorteilhaft ist es, wenn das zu prüfende Bauteil in einem Flüssigkeitsbad, wie zum Beispiel Wasser, einem Immersionsöl oder auch einem Gel, angeordnet ist. Aufgrund der gegenüber Gasen höheren Dichte und Ausbreitungsgeschwindigkeit von Ultraschallwellen $c_{medium}$ und der damit verbundenen höheren akustischen Impedanz dieser Medien ergibt sich ein besseres Ultraschalleinkopplungsvermögen an Festkörpern, was die Bauteilprüfung und Oberflächencharakterisierung mit Ultraschallwellen erleichtern kann.

Bei einem erfindungsgemäßen Verfahren, bei dem ein Ultraschall-Reflektor-Element eingesetzt wird, ist es vorteilhaft, dass die Ultraschall-Reflektivität des Reflektor-Elements möglichst groß ist und dass Ultraschallwellen unter einem größtmöglichen Bereich möglicher Einstrahlwinkel über die Oberfläche des Bauteils zum zur Detektion von Ultraschallwellen ausgebildeten Gruppenstrahler zurück reflektiert werden können. Dies kann zum Beispiel mit einem konkaven Element, wie einer Parabol- oder Hohlkugelform erreicht werden.

Bei einer Vorrichtung zur Durchführung des erfindungsgemäßen Verfahrens kann ein Schallwandler als Gruppenstrahler und zur Detektion von Ultraschallwellen ausgebildet sein. Ein zum Emittieren von Ultraschallwellen ausgebildeter herkömmlicher Schallwandler kann durch Verschwenken um einen Drehpunkt in seiner Winkelneigung zum Emittieren von Ultraschallwellen verstellt werden. Dadurch kann der Einstrahlwinkel der Ultraschallwellen auf die Oberfläche des Bauteils geändert werden, ohne dass eine mechanische Bewegung beider Schallwandler vonnöten wäre. Die emittierten Ultraschallwellen können dann an verschiedenen Auftreffpunkten am Bauteil reflektiert und von verschiedenen Gruppenstrahlerelementen des zur Detektion von Ultraschallwellen ausgebildeten Gruppenstrahlers erfasst werden.

Es ist weiterhin vorteilhaft, die Ultraschall-Gruppenstrahler einer Vorrichtung zur Durchführung des erfindungsgemäßen Verfahrens als Linien-Gruppenstrahler, Matrix-Gruppenstrahler und/oder Ring-Gruppenstrahler auszubilden. Diese Arten von Gruppenstrahlern unterscheiden sich in der Anordnung und der Ausbildung der einzelnen Gruppenstrahlerelemente, deren elektronische Ansteuerung der gewünschten Ausführungsform des erfindungsgemäßen Verfahrens und der Art des jeweiligen Gruppenstrahlers angepasst werden kann.

Das erfindungsgemäße Verfahren ist besonders vorteilhaft geeignet für die Prüfung von Oberflächen oder oberflächennahen Bereichen von Bauteilen, sowie zur Charakterisierung von Oberflächenbeschichtungen und Oberflächenbearbeitungszuständen von Bauteilen, insbesondere an oberflächenverfestigten Bauteilen, deren Oberfläche zum Beispiel kugelgestrahlt wurde. Wie bereits oben beschrieben, kann mit dem erfindungsgemäßen Verfahren eine Veränderung der Frequenzabhängigkeit der Ausbreitungsgeschwindigkeit der an der Oberfläche des Bauteils geführten Ultraschallwellen in Abhängigkeit von der Kugelstrahlintensität einer am Bauteil durchgeführten Kugelstrahlbearbeitung ermittelt werden. Die daraus ableitbare Größe der Oberflächenrandverfestigung durch Gefügeveränderungen und die Einbringung von Druckeigenspannungen ist zum Beispiel bei hochbelasteten Bauteilen von Bedeutung, die in den Triebwerken der Luftfahrtindustrie oder im Schiffbau Verwendung finden. Die Randverfestigung führt zu einer veränderten Ausbreitungsgeschwindigkeit der Ultraschallwellen am Bauteil, die mit dem erfindungsgemäßen Verfahren hinreichend genau erfasst werden können.

Es zeigen:

Fig. 1 den Aufbau eines Ultraschall-Goniometers nach dem Stand der Technik,

Fig. 2 ein Beispiel der bestimmten Frequenzabhängigkeit der Ausbreitungsgeschwindigkeit, der an der Oberfläche eines Bauteils geführten Ultraschallwellen,

Fig. 3 ein Beispiel einer Vorrichtung zur Durchführung des erfindungsgemäßen Verfahrens mit einem Gruppenstrahler und einem zum Emittieren von Ultraschallwellen ausgebildeten Schallwandler, wobei der Gruppenstrahler nicht mechanisch bewegt wird,

Fig. 4 ein Beispiel einer Vorrichtung zur Durchführung des erfindungsgemäßen Verfahrens mit zwei Gruppenstrahlern, wobei die Gruppenstrahler nicht mechanisch bewegt werden,

Fig. 5.1 eine schematische Darstellung des Emittierens einer Ultraschallwellenfront unter einem Winkel mit einem Gruppenstrahler, und

Fig. 5.2 eine schematische Darstellung des Wegunterschieds der Ultraschallwellen nach zeitlich versetzter Anregung einzelner Gruppenstrahler-elemente.

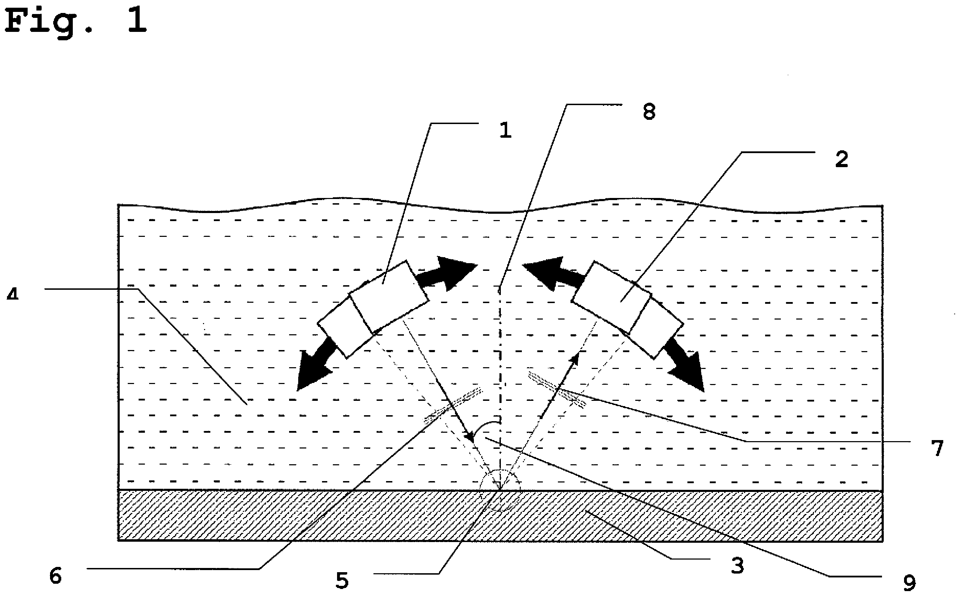

Fig. 1 zeigt eine Anordnung eines klassischen Goniometers mit zwei Schallwandlern 1 und 2. Diese sind in einem Abstand zu einem Bauteil 3 und seiner Oberfläche in einer Flüssigkeit 4 angeordnet. Der zum Emittieren von Ultraschallwellen ausgebildete Schallwandler 1 emittiert Ultraschallwellen 6, die am Auftreffpunkt 5 von der Oberfläche des Bauteils 3 reflektiert werden. Die von der Oberfläche des Bauteils 3 reflektierten Ultraschallwellen 7 werden darauf von einem zur Detektion von Ultraschallwellen ausgebildeten Schallwandler 2 erfasst. In der Anordnung in Fig. 1 sind die zwei Schallwandler 1 und 2 symmetrisch zur Oberflächennormalen 8 verstellbar, wodurch der Einstrahlwinkel 9 der Ultraschallwellen 6 auf die Oberfläche des Bauteils 3 verändert werden kann. Durch ein frequenzabhängiges Bestimmen des Einstrahlwinkels 9 mit der geringsten Ultraschallwellen-Intensität, die den Schallwandler 2 trifft, lässt sich die Oberfläche des Bauteils 3 prüfen. Dabei werden die Position und die Ausrichtung der Schallwandler 1 und 2 jeweils verändert, um einen neuen Einstrahlwinkel 9 zu vermessen.

Fig 2 zeigt eine Beispielmessung dreier frequenzabhängig ermittelter Ausbreitungsgeschwindigkeiten der an der Oberfläche des Bauteils geführten Ultraschallwellen in Meter pro Sekunde. Die Messwerte der Messwertverteilung 11 wurden an einem Bauteil ermittelt, dass keiner Kugelstrahlbearbeitung ausgesetzt war. Die Messwertverteilung 12 wurde an einem einer Kugelstrahlintensität von 4 Almen ausgesetzten Bauteil ermittelt und die Messwertverteilung 13 wurde an einem Bauteil ermittelt, das mit einer Kugelstrahlintensität von 8 Almen bearbeitet wurde. Aus diesen Messwerten lässt sich eine mögliche Anwendung des erfindungsgemäßen Verfahrens für die berührungslose und zerstörungsfreie Charakterisierung der Oberflächen von Bauteilen erkennen.

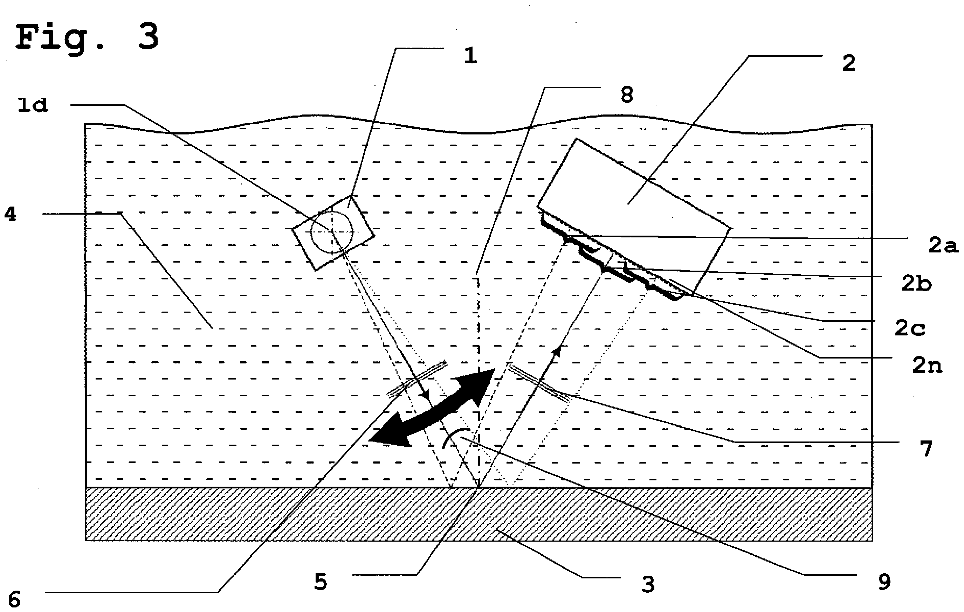

Fig. 3 zeigt eine Vorrichtung und Anordnung zur Durchführung eines erfindungsgemäßen Verfahrens. Ähnlich der in Fig 1 gezeigten Vorrichtung sind der zum Emittieren von Ultraschallwellen ausgebildete Schallwandler 1 und der zur Detektion ausgebildete Schallwandler 2 in einer Flüssigkeit 4 über einem Bauteil 3 angeordnet. Ein Unterschied besteht darin, dass der Schallwandler 2 als Gruppenstrahler mit den Gruppenstrahlerelementen 2n ausgebildet ist. Der Schallwandler 1 ist zum Emittieren von Ultraschallwellen ausgebildet und kann durch Verschwenken um einen Drehpunkt 1a in seiner Winkelneigung zum Emittieren von Ultraschallwellen verstellt werden. Dadurch kann der Einstrahlwinkel 9 der Ultraschallwellen 6 auf die Oberfläche des Bauteils 3 geändert werden. Die emittierten Ultraschallwellen 6 treffen, abhängig vom Einstrahlwinkel 9 verschiedene Auftreffpunkte 5 an der Oberfläche des Bauteils 3 und werden an diesen reflektiert. Die reflektierten Ultraschallwellen 7 werden vom zur Detektion von Ultraschallwellen ausgebildeten Gruppenstrahler 2 erfasst. Abhängig vom Einstrahlwinkel 9, treffen die reflektierten Ultraschallwellen 7 verschiedene Gruppen 2a bis 2c von Gruppenstrahlerelementen 2n des Gruppenstrahlers 2. Auf diese Weise kann durch eine Bestimmung des Einstrahlwinkels 9 mit der minimalen am Gruppenstrahler 2 und seinen Gruppenstrahlerelementen 2n detektierten Ultraschallwellen-Intensität für jede Ultraschallwellen-Frequenz der reflektierten Ultraschallwellen 7 die Ausbreitungsgeschwindigkeit der an der Oberfläche des Bauteils 3 geführten Ultraschallwellen frequenzabhängig bestimmt werden.

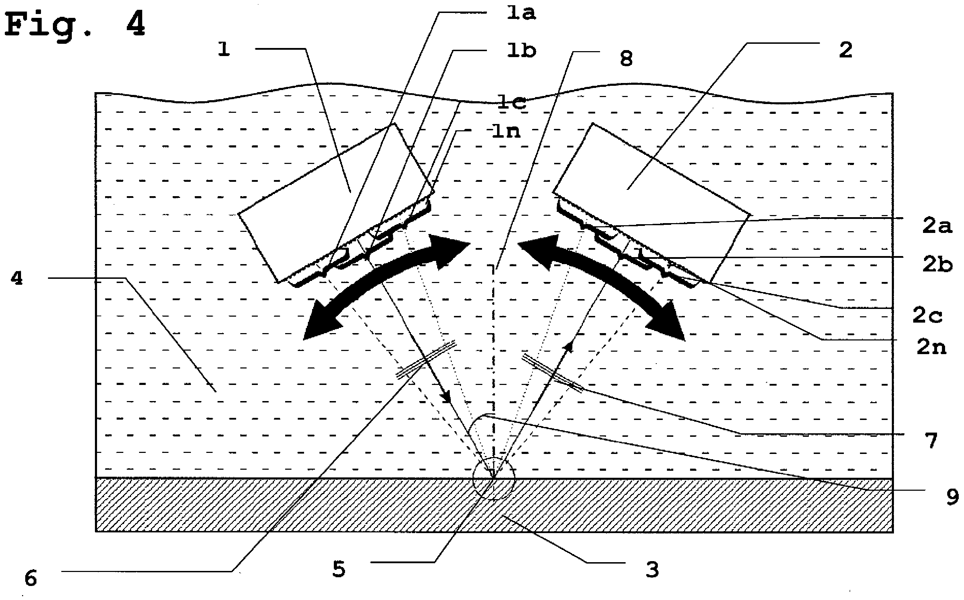

Fig. 4 zeigt eine weitere Ausführungsform einer erfindungsgemäßen Vorrichtung in einer Anordnung zur Durchführung eines erfindungsgemäßen Verfahrens. Sowohl Schallwandler 1 als auch Schallwandler 2 sind hierbei dadurch charakterisiert, dass sie als Gruppenstrahler mit den Gruppenstrahlerelementen 1n und 2n ausgebildet sind. Durch eine geeignete Ansteuerung der Gruppenstrahlerelemente 1n des zum Emittieren von Ultraschallwellen ausgebildeten Gruppenstrahlers 1 in zum Beispiel den Gruppenstrahlerelementgruppen 1a bis 1c kann der Einstrahlwinkel 9 für die Ultraschallwellen 6 auf die Oberfläche des Bauteils 3 verändert werden. Durch eine zeitliche Verzögerung der Anregung der einzelnen Gruppenstrahlerelemente 1n kann nach Gleichung (2) der Winkel β unter dem die resultierenden Ultraschallwellen 6 vom Gruppenstrahler 1 emittiert werden, verändert werden.

Im vorliegenden Ausführungsbeispiel ist der resultierende Einstrahlwinkel 9 bei einer gleichzeitigen Anregung aller Gruppenstrahlerelemente 1n gleich 30 Grad. Die 32 einzelnen Gruppenstrahlerelemente 1n sind in einem Abstand von 0,5 mm angeordnet. Erste Ultraschallwellen 6 werden mit einem Einstrahlwinkel 9 von 28 Grad emittiert, indem zwischen zwei jeweils benachbarten Gruppenstrahlerelementen 1n eine zeitliche Verzögerung Δt von -12 ns zwischen den Maxima der Anregung der benachbarten Gruppenstrahlerelemente gewählt wird. Eine negative zeitliche Verzögerung bedeutet hierbei, dass das Gruppenstrahlerelement 32 vor dem Gruppenstrahlerelement 31 und so fort, jeweils im zeitlichen Abstand von 12 ns angeregt wird. Ein Einstrahlwinkel 9 von 32 Grad wird eingestellt, indem die Gruppenstrahlerelemente 1n einzeln und zeitlich verzögert angeregt werden, beginnend mit dem Gruppenstrahlerelement 1.1, und, nach 12 ns, gefolgt vom Gruppenstrahlerelement 1.2 und nach weiteren 12 ns vom Gruppenstrahlerelement 1.3 und so fort.

Nach Reflexion an der Oberfläche des Bauteils 3 treffen die reflektierten Ultraschallwellen 7 auf den zur Detektion von Ultraschallwellen ausgebildeten Gruppenstrahler 2 mit den Gruppenstrahlerelementen 2n. Dabei werden die reflektierten Ultraschallwellen 7 durch die Untergruppen 2a bis 2c der Gruppenstrahlerelemente 2n korrespondierend zu den Gruppen 1a bis 1c erfasst. Wird die Intensität der reflektierten Ultraschallwellen für ein Spektrum von Ultraschall-Frequenzen erfasst, lässt sich die frequenzabhängige Ausbreitungsgeschwindigkeit von an der Oberfläche des Bauteils 3 geführten Ultraschallwellen nach dem erfindungsgemäßen Verfahren bestimmen.

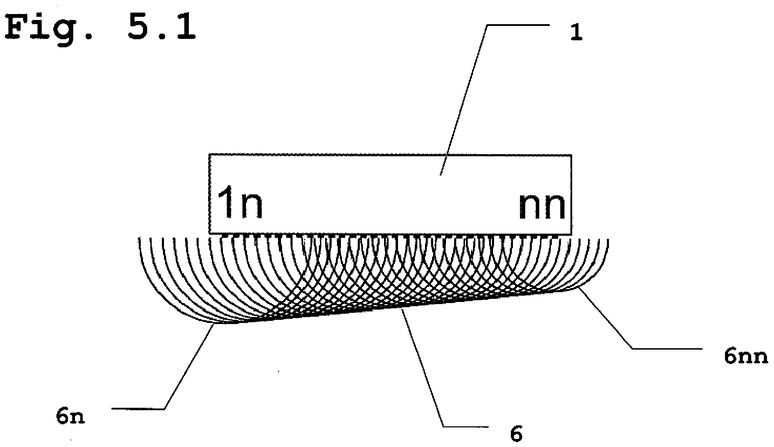

Fig 5.1 illustriert das Konzept der Ausbildung von resultierenden Ultraschallwellen 6 durch Überlagerung von einzelnen Ultraschallwellen 6nn, die von den Gruppenstrahlerelementen 1n emittiert werden. Durch eine zeitlich versetzte Anregung der Gruppenstrahlerelemente 1n bis nn, wird dabei der Winkel β eingestellt. Dabei wird, ähnlich dem vorigen Ausführungsbeispiel, das Gruppenstrahlerelement 1n zuerst zum Emittieren der einzelnen Ultraschallwellen 6n angeregt und zuletzt emittiert das Gruppenstrahlerelement 1nn die Ultraschallwellen 6nn. Durch eine Überlagerung der einzelnen Ultraschallwellen 6n bis 6nn ergeben sich die resultierenden Ultraschallwellen 6 in einem Winkel β zur Ebene des Gruppenstrahlers 1. Der Winkel β ist gleich dem Winkel zwischen der Ultraschallwellen-Abstrahlrichtung und der Ebenen-Normalen des Gruppenstrahlers 1. Abhängig von der Ausrichtung des Gruppenstrahlers 1 zur Oberfläche eines Bauteils kann damit der Einstrahlwinkel der Ultraschallwellen 6 variiert werden.

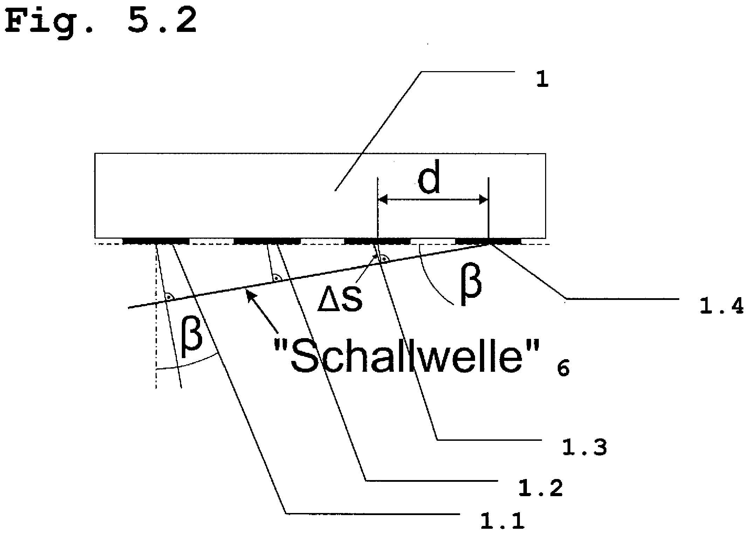

Als Erweiterung der Fig. 5.1 zeigt Fig. 5.2 vier Gruppenstrahlerelemente 1.1, 1.2, 1.3 und 1.4, die am Gruppenstrahler 1 unter einem Abstand d angeordnet sind und deren zeitversetzt emittierte einzelne Ultraschallwellen einen Wegunterschied Δs aufweisen, den die einzelnen Ultraschallwellen während der zeitlichen Differenz der Anregung der Einzelelemente 1.1 bis 1.4 zurückgelegt haben. Durch die Überlagerung der einzelnen Ultraschallwellen entstehen resultierende Ultraschallwellen 6, deren Wellenfront sich unter einem Winkel β gegenüber der Ebene des Gruppenstrahlers 1 fortpflanzt. Durch die Abhängigkeit des Wegunterschieds Δs vom Abstand der Einzelelemente d muss die zeitliche Verzögerung der Anregung der einzelnen Gruppenstrahlerelemente dem jeweilig verwendeten Gruppenstrahler 1 angepasst werden.

**Patentansprüche**

1.  Verfahren zur zerstörungsfreien und berührungslosen Prüfung von Bauteilen (3),
    bei dem Ultraschall-Wellen (6) mit einem von der Oberfläche des Bauteils (3) beabstandet angeordneten Ultraschall-Sendeschallwandler (1) in einem nicht senkrechten vorgebbaren Einstrahlwinkel (9) auf die Oberfläche des Bauteils (3) eingestrahlt und von der Oberfläche des Bauteils (3) reflektierte Ultraschall-Wellen (7) detektiert werden, wobei die von den Gruppenstrahlerelementen (2n) eines zur Detektion von Ultraschall-Wellen (7) ausgebildeten Ultraschall-Gruppenstrahlers (2) detektierte Ultraschall-Intensität der an der Oberfläche des Bauteils (3) reflektierten Ultraschall-Wellen (7) erfasst wird, wobei
    eine Erfassung des räumlichen Intensitätsprofils der reflektierten Ultraschallwellen durch Interferenz von direkt an der Oberfläche des Bauteils (3) reflektierten Ultraschallwellen mit Ultraschallwellen, die von an der Oberfläche des Bauteils (3) geführten Ultraschallwellen abgestrahlt werden, durchgeführt wird, und
    daraus die Phasenverschiebung der an der Oberfläche des Prüfkörpers geführten Ultraschall-Wellen, in Bezug zu den direkt an der Oberfläche des Bauteils (3) reflektierten Ultraschall-Wellen (7), bestimmt wird.

2. Verfahren nach Anspruch 1,
***dadurch gekennzeichnet, dass***
die Ultraschall-Intensität zeitaufgelöst und/oder frequenzaufgelöst erfasst wird und
daraus die Frequenzabhängigkeit der Ausbreitungsgeschwindigkeit der an der Oberfläche des Bauteils (3) geführten Ultraschall-Wellen bestimmt wird.

3. Verfahren nach Anspruch 1 oder 2,
***dadurch gekennzeichnet, dass***
die Frequenzabhängigkeit der Ausbreitungsgeschwindigkeit der an der Oberfläche des Bauteils (3) geführten Ultraschall-Wellen durch die Frequenzabhängigkeit des Ultraschall-Einstrahlwinkels (9), der ein Minimum der detektierten Ultraschall-Intensität an den Gruppenstrahlerelementen (2n) des zur Detektion von UltraschallWellen (7) ausgebildeten Ultraschall-Gruppenstrahlers (2) für eine jeweilige eingestrahlte Ultraschall-Wellen-Frequenz aufweist, bestimmt wird.

4. Verfahren nach einem der vorhergehenden Ansprüche,
***dadurch gekennzeichnet, dass***
der Einstrahlwinkel (9) an der Oberfläche des Bauteils (3) durch eine zeitliche und räumliche Steuerung und/oder Regelung der Anregung der Gruppenstrahlerelemente (1n) eines zum Emittieren von Ultraschall-Wellen (6) ausgebildeten Ultraschall-Gruppenstrahlers (1) ohne eine Bewegung des Ultraschall-Gruppenstrahlers (1) verändert wird.

5. Verfahren nach einem der vorhergehenden Ansprüche,
***dadurch gekennzeichnet, dass***
die auf die Oberfläche des Bauteils (3) eingestrahlten Ultraschall-Wellen (6) durch eine zeitliche und räumliche Steuerung und/oder Regelung der Anregung der Gruppenstrahlerelemente (1n) eines zum Emittieren von Ultraschall ausgebildeten Ultraschall-Gruppenstrahlers (1) in Richtung der Oberfläche des Bauteils (3) fokussiert werden.

6. Verfahren nach einem der vorhergehenden Ansprüche,
***dadurch gekennzeichnet, dass***
eine definierte räumliche und/oder zeitliche Intensitätsverteilung der auf das Bauteil (3) eingestrahlten Ultraschall-Wellen (6) durch eine zeitliche und räumliche Steuerung und/oder Regelung der Anregung der Gruppenstrahlerelemente (1n) eines zum Emittieren von Ultraschall ausgebildeten Ultraschall-Gruppenstrahlers (1) erreicht wird.

7. Verfahren nach einem der vorhergehenden Ansprüche,
***dadurch gekennzeichnet, dass***
jedes Gruppenstrahlerelement (1n) eines zum Emittieren von Ultraschall ausgebildeten Ultraschall-Gruppenstrahlers (1) einzeln zum Emittieren von Ultraschall-Wellen (6) angeregt wird,
die Intensität der von der Oberfläche des Bauteils (3) reflektierten Ultraschall-Wellen (7) von allen Gruppenstrahlerelementen (2n) eines zur Detektion von Ultraschall ausgebildeten Ultraschall-Gruppenstrahlers (2) erfasst wird, und
die erfassten zeitaufgelösten und/oder frequenzaufgelösten Ultraschall-Intensitäten überlagert werden.

8. Verfahren nach einem der vorhergehenden Ansprüche,
***dadurch gekennzeichnet, dass***
die Ultraschall-Emission und die Ultraschall-Detektion von einem Ultraschall-Gruppenstrahler (1 oder 2) durch alternierendes Umschalten des Ultraschall-Gruppenstrahlers (1 oder 2) durchgeführt werden.

9. Verfahren nach einem der vorhergehenden Ansprüche,
***dadurch gekennzeichnet, dass***
die von einem Ultraschall-Gruppenstrahler (1) emittierten Ultraschall-Wellen (6), die an der Oberfläche des Bauteils reflektiert werden, von einem Reflektor-Element reflektiert werden, und die wiederum an der Oberfläche des Bauteils (3) reflektierten Ultraschall-Wellen (7) von dem oder einem zur Detektion von Ultraschall-Wellen ausgebildeten Ultraschall-Gruppenstrahler (1 oder 2) detektiert werden.

10. Verfahren nach dem vorhergehenden Anspruch,
***dadurch gekennzeichnet, dass***
es mit genau einem Ultraschall-Gruppenstrahler durchgeführt wird.

11. Verfahren nach einem der vorhergehenden Ansprüche,
***dadurch gekennzeichnet, dass***
die Ultraschall-Wellen auf ein in einem Flüssigkeitsbad (4) angeordnetes Bauteil (3) gerichtet werden.

12. Verfahren nach einem der vorhergehenden Ansprüche,
***dadurch gekennzeichnet, dass***
Oberflächenbeschichtungen und/oder Oberflächenbearbeitungszustände von Bauteilen_charakterisiert werden.

13. Verfahren nach einem der vorhergehenden Ansprüche,
***dadurch gekennzeichnet, dass***
oberflächenverfestigte Bauteile charakterisiert werden.

Claims

1. A method of nondestructive and contactless testing of components (3),
wherein ultrasonic waves (6) are irradiated onto the surface of the component (3) at a predefinable, non-perpendicular angle of incidence (9) using an ultrasonic transmission sound transducer (1) spaced apart from the surface of the component (3) and ultrasonic waves (7) reflected from the surface of the component (3) are detected,
wherein
the ultrasonic intensity of the ultrasonic waves (7) reflected at the surface of the component (3) detected by the antenna array elements (2n) of an ultrasonic antenna array (2) configured for detecting ultrasonic waves (7) is detected,
wherein
a detection of the spatial intensity profile of the reflected ultrasonic waves by interference of ultrasonic waves being directly reflected at the surface of the component (3) is performed using ultrasonic waves which are radiated from ultrasonic waves being guided at the surface of the component (3), and
the phase shift of the ultrasonic waves guided at the surface of the test body is determined therefrom with respect to the ultrasonic waves (7) directly reflected at the surface of the component (3).

2. A method in accordance with claim 1,
**characterized in that**
the ultrasonic intensity is detected with time resolution and/or with frequency resolution and
the frequency dependence of the propagation speed of the ultrasonic waves guided at the surface of the component (3) is determined therefrom.

3. A method in accordance with claim 1 or claim 2,
**characterized in that**
the frequency dependence of the propagation speed of the ultrasonic waves guided at the surface of the component (3) is determined by the frequency dependence of the ultrasonic wave angle of irradiation (9) which has a minimum of the detected ultrasonic intensity at the antenna array elements (2n) of the ultrasonic antenna array (2) configured for detecting ultrasonic waves (7) for a respective irradiated ultrasonic wave frequency.

4. A method in accordance with one of the preceding claims,
**characterized in that**
the angle of irradiation (9) at the surface of the component (3) is varied by a temporal and spatial control and/or regulation of the excitation of the antenna array elements (1n) of an ultrasonic antenna array (1) configured for emitting ultrasonic waves (6) without a movement of the ultrasonic antenna array (1).

5. A method in accordance with one of the preceding claims,
**characterized in that**
the ultrasonic waves (6) irradiated onto the surface of the component (3) are focused in the direction of the surface of the component (3) by a temporal and spatial control and/or regulation of the excitation of the antenna array elements (1n) of an ultrasonic antenna array (1) configured for emitting ultrasound.

6. A method in accordance with one of the preceding claims,
**characterized in that**
a defined spatial and/or temporal intensity distribution of the ultrasonic waves (6) irradiated onto the component (3) is achieved by a temporal and spatial control and/or regulation of the excitation of the antenna array elements (1n) of an ultrasonic antenna array (1) configured for emitting ultrasound.

7. A method in accordance with one of the preceding claims,
**characterized in that**
each antenna array element (1n) of an ultrasonic antenna array (1) configured for emitting ultrasound is individually excited for emitting ultrasonic waves (6); the intensity of the ultrasonic waves (7) reflected from the surface of the component (3) is detected by all antenna array elements (2n) of an ultrasonic antenna array (2) configured for detecting ultrasound; and the detected time-resolved and/or frequency-resolved ultrasonic intensities are superimposed.

8. A method in accordance with one of the preceding claims,
**characterized in that**
the ultrasound emission and the ultrasound detection are carried out by an ultrasonic antenna array (1 or 2) by alternating switching of the ultrasonic antenna array (1 or 2).

9. A method in accordance with one of the preceding claims,
**characterized in that**
the ultrasonic waves (6) emitted by an ultrasonic antenna array (1) which are reflected at the surface of the component (3) are reflected by a reflector element and the ultrasonic waves (7) reflected in turn at the surface of the component (3) are detected by the or an ultrasonic antenna array (1 or 2) configured for detecting ultrasonic waves.

10. A method in accordance with the preceding claim,
**characterized in that**
it is carried out using exactly one ultrasonic antenna array.

11. A method in accordance with one of the preceding claims,
**characterized in that**
the ultrasonic waves are directed to a component (3) arranged in a liquid bath (4).

12. A method in accordance with one of the preceding claims,
**characterized in that**
surface coatings and/or surface machining states of components are characterized

13. A method in accordance with one of the preceding claims
**characterized in that**
surface-consolidated components are characterized.


**Revendications**

1. Procédé de contrôle non destructif et sans contact de composants (3),
dans lequel des ondes ultrasonores (6) sont émises vers la surface du composant (3) avec un transducteur acoustique émetteur d'ultrasons (1), avec un angle d'incidence (9) prédéterminé non perpendiculaire et les ondes ultrasonores (7) réfléchies par la surface du composant (3) sont détectées,
l'intensité détectée des ondes ultrasonores (7) réfléchies à la surface du composant (3) étant mesurée par des éléments émetteurs (2n) d'un réseau d'émetteurs d'ultrasons (2) conçu pour la détection d'ondes ultrasonores (7),
une mesure du profil d'intensité spatial des ondes ultrasonores réfléchies étant effectuée grâce à une interférence des ondes ultrasonores réfléchies directement à la surface du composant (3) avec des ondes ultrasonores émises par les ondes ultrasonores guidées à la surface du composant (3) et
le décalage de phase des ondes ultrasonores guidées à la surface du corps à contrôler par rapport aux ondes ultrasonores (7) réfléchies directement à la surface du composant (3) étant déterminée.

2. Procédé selon la revendication 1,
**caractérisé en ce que**
l'intensité des ondes ultrasonores est mesurée en fonction du temps et/ou de la fréquence et la dépendance de la vitesse de propagation en fonction de la fréquence des ondes ultrasonores guidées à la surface du composant (3) est ainsi déterminée.

3. Procédé selon la revendication 1 ou 2,
**caractérisé en ce que**
la dépendance de la vitesse de propagation en fonction de la fréquence des ondes ultrasonores guidées à la surface du composant (3) est déterminée par la dépendance de l'angle d'incidence des ultrasons (9) en fonction de la fréquence, qui présente un minimum de l'intensité des ultrasons détectés au niveau des éléments émetteurs (2n) du réseau d'émetteurs d'ultrasons (2) conçu pour la détection d'ondes ultrasonores (7) pour une fréquence d'ondes ultrasonores entrantes correspondante.

4. Procédé selon l'une des revendications précédentes,
**caractérisé en ce que**
l'angle d'incidence (9) à la surface du composant (3) est modifié par un contrôle et/ou une régulation temporelle et spatiale de l'excitation des éléments émetteurs (1n) d'un réseau d'émetteurs d'ultrasons (1) conçu pour l'émission d'ondes ultrasonores (6) sans déplacement du réseau d'émetteurs ultrasonores (1).

5. Procédé selon l'une des revendications précédentes,
**caractérisé en ce que**
les ondes ultrasonores (6) arrivant à la surface du composant (3) sont focalisées par un contrôle et/ou une régulation temporelle et spatiale de l'excitation des éléments émetteurs (1n) d'un réseau d'émetteurs d'ultrasons (1) conçu pour l'émission d'ultrasons en direction de la surface du composant (3).

6. Procédé selon l'une des revendications précédentes,
**caractérisé en ce que**
une répartition d'intensité spatiale et/ou temporelle définie des ondes ultrasonores (6) arrivant sur le composant (3) est obtenue grâce à un contrôle et/ou une régulation temporelle et spatiale de l'excitation des éléments émetteurs (1n) d'un réseau d'émetteurs d'ultrasons (1) conçu pour l'émission d'ultrasons.

7. Procédé selon l'une des revendications précédentes,
**caractérisé en ce que**
chaque élément émetteur (1n) d'un réseau d'émetteurs d'ultrasons (1) conçu pour l'émission d'ultrasons est excité individuellement pour l'émission d'ondes ultrasonores (6),
l'intensité des ondes ultrasonores (7) réfléchies par la surface du composant (3) est mesurée par tous les éléments émetteurs (2n) d'un réseau d'émetteurs d'ultrasons (2) conçu pour la détection d'ultrasons et
les intensités des ultrasons ainsi mesurées en fonction du temps et/ou de la fréquence sont superposées.

8. Procédé selon l'une des revendications précédentes,
**caractérisé en ce que**

l'émission d'ultrasons et la détection d'ultrasons sont effectuées par un réseau d'émetteurs d'ultrasons (1 ou 2) par commutation alternée du réseau d'émetteurs d'ultrasons (1 ou 2).

9. Procédé selon l'une des revendications précédentes,
   **caractérisé en ce que**
   les ondes ultrasonores (6) émises par un réseau d'émetteurs d'ultrasons (1), qui sont réfléchies à la surface du composant, sont réfléchies par un élément réflecteur et les ondes ultrasonores (7) réfléchies à leur tour à la surface du composant (3) sont détectées par le ou un réseau d'émetteurs d'ultrasons (1 ou 2) conçu pour la détection d'ondes ultrasonores.

10. Procédé selon la revendication précédente,
    **caractérisé en ce que**
    il est exécuté avec exactement un réseau d'émetteurs d'ultrasons.

11. Procédé selon l'une des revendications précédentes,
    **caractérisé en ce que**
    les ondes ultrasonores sont dirigées vers un composant (3) disposé dans un bain de liquide (4).

12. Procédé selon l'une des revendications précédentes,
    **caractérisé en ce que**
    des revêtements de surfaces et/ou des états de traitements de surfaces de composants sont caractérisés.

13. Procédé selon l'une des revendications précédentes,
    **caractérisé en ce que**
    des composants soumis à une consolidation de surface sont caractérisés.

# Fig. 1

EP 2 593 782 B1

Fig. 2

# Fig. 3

# Fig. 4

EP 2 593 782 B1

Fig. 5.1

Fig. 5.2

EP 2 593 782 B1

1

d

Δs

β

β

"Schallwelle" 6

1.4

1.3

1.2

1.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0121890 A2
- US 2009019937 A1
- US 4098129 B
- EP 0487871 A1
- EP 2182352 A2